# EUROPÄISCHE PATENTANMELDUNG

(11) **EP 3 742 583 A1**
(43) Veröffentlichungstag der Anmeldung: **25.11.2020**
(21) Anmeldenummer: 19175978.6
(22) Anmeldetag: 22.05.2019
(51) Int. Cl.: H02K 1/24, H02K 19/10, H02K 29/03

(54) **VIERPOLIGER SYNCHRON-RELUKTANZMOTOR**

(71) Anmelder: Siemens Aktiengesellschaft, 80333 München (DE)
(72) Erfinder: Schmidt, Johannes, 97218 Gerbrunn (DE); Bach, Regina, 97640 Hendungen (DE)

(57) **Zusammenfassung**

Die Erfindung betrifft einen Synchron-Reluktanzmotor, insbesondere vierpoliger Synchron-Reluktanzmotor (1) mit
- einem Stator (2) mit 48 Statornuten (3) zur Aufnahme eines Wicklungssystems (8),
- einem Reluktanzrotor (5), der durch einen Luftspalt (10) vom Stator (2) beabstandet ist, wobei der Reluktanzrotor (5) Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten (7) und magnetischen Flusssperren (6), die durch eine dementsprechende Anordnung d- und q-Achsen des Reluktanzrotors (5) bilden,
- einem geometrischen Nutteilungswinkel des Reluktanzrotors (5) von αr = 6° oder 10°, der zwischen zwei benachbarten magnetischen Flusssperren (6) am Luftspalt (10) ist.

## Beschreibung

Die Erfindung betrifft einen vierpoligen Synchron-Reluktanz-motor.

Bei Synchron-Reluktanzmotoren werden Reluktanzrotorbleche mit entsprechenden Aussparungen eingesetzt. Durch die Ausstanzungen ergeben sich streifenförmige Blechabschnitte, die als Flussleitabschnitte dienen und den magnetischen Fluss in der für die Bereitstellung der nötigen Reluktanz des Rotors nötigen Weise führen. Radial zwischen den einzelnen Flussleitabschnitten befinden sich amagnetische Bereiche, die durch Ausstanzungen geschaffen werden und mit Luft oder magnetisch schlecht leitfähigem Material versehen sind, d.h. als magnetische Flusssperren wirken. Durch die streifenförmigen Flussleitabschnitte ergibt sich eine hohe Drehmomentausbeute. Die magnetische Permeabilität des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, die jeweils auf d-Achsen (magnetische Vorzugsrichtungen) angeordnet sind.

So ist die d-Achse mit einem Flussleitabschnitt vom Innenzum Außendurchmesser durchgehend aus Blech gebildet, während die q-Achse durch Flusssperren unterbrochen ist.

Ein derartiger Synchron-Reluktanz-Motor ist aus der Schrift US 5 818 140 A1 bekannt, wobei dort bereits Möglichkeiten zur Reduktion der Drehmomentenwelligkeit vorgestellt sind. Die dort vorgestellten Maßnahmen reduzieren zu einem gewissen Prozentsatz die Drehmomentenwelligkeit, als auch das Geräusch und Schwingungsverhalten im Vergleich zu einem Synchron-Reluktanzmotor mit einer identischen oder nahezu identischen Anzahl von Nutteilungen von Stator und Rotor, also Ns = Nr.

Ausgehend davon liegt der Erfindung die Aufgabe zugrunde, einen vierpoligen Synchron-Reluktanzmotor dahin zu verbessern, dass die Drehmomentenwelligkeit weiter reduziert wird, ohne das Nutzdrehmoment zu verringern.

Die Lösung der gestellten Aufgabe gelingt durch einen Synchron-Reluktanzmotor, insbesondere vierpoliger Synchron-Reluktanzmotor mit
- einem Stator mit 48 Statornuten zur Aufnahme eines Wicklungssystems,
- einem Reluktanzrotor, der durch einen Luftspalt vom Stator beabstandet ist, wobei der Reluktanzrotor Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten und magnetischen Flusssperren, die durch eine dementsprechende Anordnung d- und q-Achsen des Reluktanzrotors bilden,
- einem geometrischen Nutteilungswinkel des Reluktanzrotors von αr = 6°, der zwischen zwei benachbarten magnetischen Flusssperren am Luftspalt ist.

Die Lösung der gestellten Aufgabe gelingt ebenso durch einen Synchron-Reluktanzmotor, insbesondere vierpoliger Synchron-Reluktanzmotor mit
- einem Stator mit 48 Statornuten zur Aufnahme eines Wicklungssystems,
- einem Reluktanzrotor, der durch einen Luftspalt vom Stator beabstandet ist, wobei der Reluktanzrotor Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten und magnetischen Flusssperren, die durch eine dementsprechende Anordnung d- und q-Achsen des Reluktanzrotors bilden,
- einem geometrischen Nutteilungswinkel des Reluktanzrotors von αr = 10°, der zwischen zwei benachbarten magnetischen Flusssperren am Luftspalt ist.

Erfindungsgemäß wird nunmehr in Abhängigkeit von der gewählten Anzahl von Rotornuten bzw. vom Nutteilungswinkel αr vorteilhafterweise die Anzahl der Flussbarrieren maximiert. Dadurch wird die Drehmoment-Dichte und auch das mittlere Drehmoment der Maschine erhöht. Die Anzahl der Flussbarrieren wird durch den gewählten Nutteilungswinkel bzw. die Anzahl der Rotornuten, als auch durch die filigranen Strukturen und damit letztlich auch durch die Achshöhe nach oben begrenzt.

Eine Flussbarriere ist demnach ein Steg, der sich am Ende einer Flusssperre im Bereich des Luftspaltes der dynamoelektrischen Maschine ergibt.

Durch die erfindungsgemäße Ausgestaltung des Reluktanzrotors im Hinblick auf den Stator werden nunmehr Pendelmomente mit Ordnungszahlen der Statornutung, sowie deren Vielfache maßgeblich reduziert. Des Weiteren wird dabei die Drehmomentenwelligkeit minimiert. Damit wird das mittlere Drehmoment erhöht und die Leistung des Reluktanzmotors gesteigert. Insbesondere ist es nunmehr nicht mehr erforderlich, den Reluktanzmotor, stator- und/oder rotorseitig um einen vorgegebenen Schrägungswinkel zu schrägen, was aber dennoch optional zusätzlich ausgeführt sein kann, um die Drehmomentenwelligkeit weiter zu reduzieren.

Um auch bei vergleichsweise hohen Drehzahlen eine ausreichende Festigkeit des Reluktanzrotors, hinsichtlich Zentrifugalkräften zu erhalten, bilden Stege am radial äußeren Rand des Rotors der Flusssperren einen umfänglich zusammenhängenden Verbindungsring.

Dieser Verbindungsring kann aus einem anderen Material oder auch lediglich Teil des Blechs sein - also einstückig, und somit lediglich durch den Ausstanzungsvorgang am Blech gebildet sein.

Die einzelnen Flussbarrieren können somit je nach umfänglicher Lage eine radial größere oder kleinere Dicke aufweisen. Beispielsweise können die Flussbarrieren im Bereich der d-Achse radial dünner ausgeführt sein als im Bereich der q-Achse.

Die Erfindung sowie weitere vorteilhafte Ausgestaltungen der Erfindung werden anhand beispielhaft dargestellter Ausführungsbeispiele näher erläutert. Darin zeigen:
- FIG 1: einen Reluktanzmotor mit einer Nutteilung,
- FIG 2, FIG 3: Reluktanzmotoren mit jeweils einer anderen Nutteilung,
- FIG 4: eine Detaildarstellung eines Reluktanzrotors.

Ein Reluktanzmotor 1 weist einen Stator 2 mit Statornuten 3 auf, in denen ein Wicklungssystem 8 positioniert ist. Das Wicklungssystem 8 kann sowohl als Einschicht- als auch als Zweischichtwicklung ausgeführt sein. Vor allem bei Zweischichtwicklungen werden die Wicklungen gesehnt ausgeführt. das vorzugsweise aus gesehnten Spulen aufgebaut ist. Vorteilhafterweise ist in den Statornuten 3 ein dreisträngiges Wicklungssystem untergebracht. Durch einen Luftspalt 10 von der Innenbohrung des Stators 2 beabstandet ist ein Reluktanzrotor 5 angeordnet, der vierpolig ausgeführt ist.

Beispielsweise durch Ausstanzungen von vorgegebenen Blechen ergeben sich streifenförmige Blechabschnitte, die als Flussleitabschnitte 7 dienen und den magnetischen Fluss in der für die Bereitstellung der nötigen Reluktanz des Reluktanzrotors 5 führen. Radial zwischen den einzelnen Flussleitabschnitten 7 befinden sich amagnetische Bereiche, die durch Ausstanzungen geschaffen werden und mit Luft oder magnetisch schlecht leitfähigem Material versehen sind, d.h. als magnetische Flusssperren 6 wirken. Durch die streifenförmigen und bogenförmigen Flussleitabschnitte 7 ergibt sich eine hohe Drehmomentausbeute. Die magnetische Permeabilität des aus den axial gestapelten Blechen gebildeten Blechpakets ist in Richtung der q-Achse, d.h. der magnetischen Sperrrichtung aufgrund der unmagnetischen Bereiche verhältnismäßig klein.

Die streifenförmigen Flussleitabschnitte 7 verlaufen quer, insbesondere senkrecht zu der q-Achse und verbinden in Umfangsrichtung benachbarte Pole des Reluktanzrotors 5, wobei die Pole jeweils auf d-Achsen (magnetische Vorzugsrichtungen) angeordnet sind.

Die Aussparungen, welche als Flusssperre 6 dienen, verlaufen im Wesentlichen bogenförmig von einem Pol zum benachbarten Pol. Darüber hinaus sind sie im Wesentlichen streifenförmig.

Aus Stabilitätsgründen können die Flusssperren 6 von radial verlaufenden bzw. ausgerichteten Stabilisierungsstegen 15 unterbrochen sein. Deren physische Position innerhalb einer Flusssperre 6 ist aus magnetischer Sicht unwichtig. Die dargestellte Breite der Stabilisierungsstege 15 ist aus zeichnerischen Gründen größer als die tatsächliche Größe.

Radial betrachtet ergeben sich zwischen den bogenförmigen, streifenförmigen Aussparungen, also den Flusssperren 6 somit weiterhin ebenfalls streifenförmige, bogenförmige Flussleitabschnitte 7.

Die bogenförmigen, nicht magnetischen Aussparungen zwischen benachbarten Polen verlaufen quer, insbesondere senkrecht zu den q-Achsen, die winkelhalbierend zwischen den d-Achsen liegen. Auf den q-Achsen erfolgt also Flusssperrung.

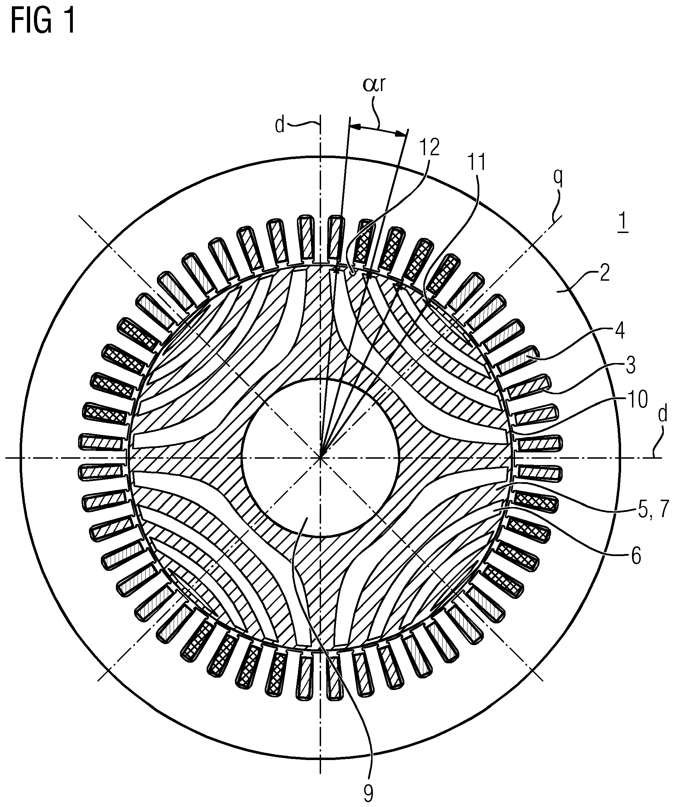

FIG 1 bis 3 dargestellten Querschnitte eines Reluktanzmotors 1 mit möglichen Reluktanzrotorblechen sind für einen vierpoligen Reluktanzrotor 5. Dementsprechend weist das Reluktanzrotorblech zwei senkrecht zueinander stehende d-Achsen auf, die magnetische Vorzugsrichtungen darstellen und die durch das Zentrum des Reluktanzrotorblechs getrennt jeweils d-Achsenhälften besitzen.

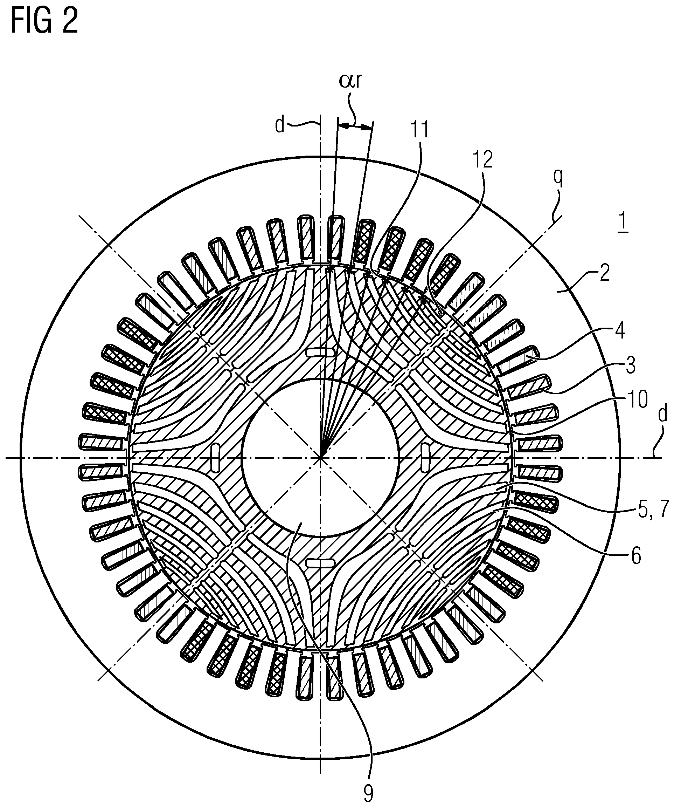

Die d- und die q-Achsen des Reluktanzrotors 5 werden somit durch Flusssperren 6 und magnetisch leitfähige Flussleitabschnitte 7 gebildet. Im Bereich des Luftspalts 10 der dynamoelektrischen Maschine bzw. des Reluktanzmotors 1 sind die Flusssperren 6 durch Stege bzw. Flussbarrieren 11, 12 vom Luftspalt 10 beabstandet und bilden einen umfänglich zusammenhängenden Verbindungsring. Dies ist aus mechanischen Festigkeitsgründen, insbesondere bei hohen Drehzahlen des Reluktanzmotor 1 notwendig. Zwischen diesen Flussbarrieren 11, 12 also den realen Flussbarrieren 11 und den virtuellen Flussbarrieren 12 (gemäß FIG 2) sind vorgegebene Nutteilungswinkel αr des Reluktanzrotors 5.

FIG 1 zeigt einen Nutteilungswinkel αr von ca. 10° geometrisch, mit umfänglich 32 angeordneten Flussbarrieren 11.

Die Nutzahl des Stators 2 ist 48 und die Nutzahl des Reluktanzrotors 5 ist 36.

Wobei u.a. herstellungsbedingt oder konstruktionsbedingt der Nutteilungswinkel αr mit einer Toleranz von bis zu ± 0,3° versehen sein kann.

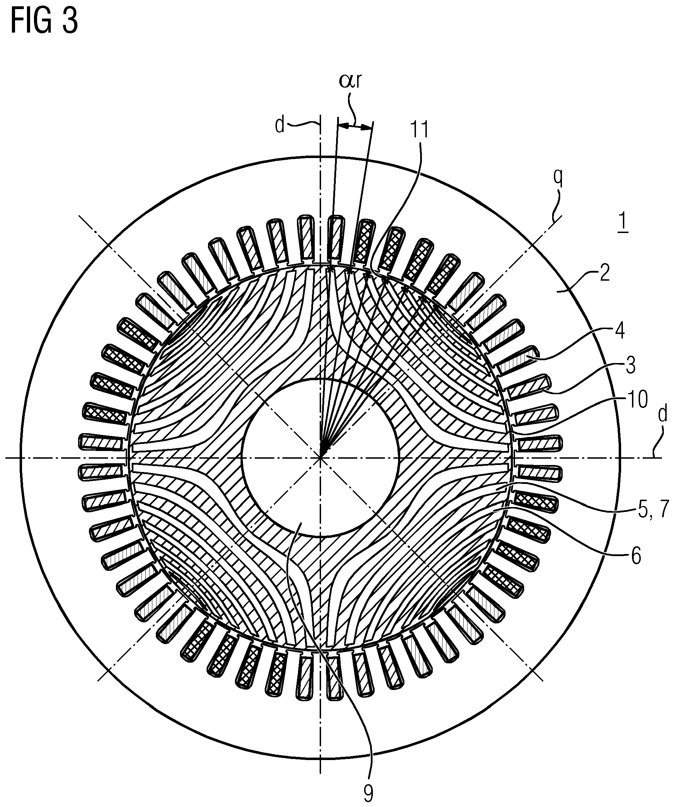

FIG 2 und 3 zeigen Nutteilungswinkel αr von jeweils ca. 6° geometrisch, mit umfänglich 56 angeordneten Flussbarrieren 11. In FIG 2 sind dabei 48 reale und acht virtuelle ausgebildete Flussbarrieren vorhanden. In Fig 3 sind 56 real ausgebildet Flussbarrieren 11 vorhanden. Die Nutzahl des Stators 2 ist 48 und die Nutzahl des Reluktanzrotors 5 ist bei diesen Ausführungen 60.

Wobei u.a. fertigungs- oder konstruktionsbedingt der Nutteilungswinkel αr dort mit einer Toleranz von bis zu ± 0,5° versehen sein kann.

Eine Welle und damit der mit ihr drehfest verbundene Reluktanzrotor 5 ist dann um eine Rotationsachse drehbar gelagert, so dass der Reluktanzrotor 5 in einem Stator 2 des Reluktanzmotors 1 eine Rotation um die Rotationsachse vollführen kann.

Der Reluktanzrotor 5 weist als magnetisch aktives Teil das Blechpaket auf, das aus mehreren Schichten bzw. Blechen gebildet ist, die jeweils weichmagnetisches, insbesondere ferromagnetisches, Material aufweisen. Diese Schichten weisen ferner elektrisch isolierende Teilschichten auf, um Wirbelströme in dem Blechpaket im Betrieb des Reluktanzmotors 1 zu unterbinden.

Die Rotorbleche sind axial fluchtend in dem Blechpaket hintereinander angeordnet, so dass die Aussparungen und entsprechend auch die Flussleitabschnitte 7 axial fluchten. Vorzugsweise ist somit keine Schrägung von Stator 2 und/oder Reluktanzrotor 5 notwendig, um ein maximales Drehmoment bereitzustellen, das eine vergleichsweise geringe Drehmomentenwelligkeit aufweist.

Um die Drehmomentenwelligkeit des Reluktanzmotors jedoch weiter zu reduzieren, können die Rotorbleche axial betrachtet weiterhin geschrägt oder gestaffelt angeordnet werden.

Die Rotorbleche der Schichten können alle die gleiche Querschnittsform aufweisen, was beispielsweise einen Stanzprozess bei der Herstellung des Rotorblechpaketes des Reluktanzrotors 5 vereinfacht.

Damit der Reluktanzrotor 5 am Außenumfang geschlossen ist, besitzt jedes Rotorblech an seinem Außenrand einen geschlossenen Verbindungsring. Er fixiert damit auch die Flussleitabschnitte 7 und die Flusssperren 6. Der Verbindungring weist in Umfangsrichtung betrachtet eine Abfolge von Stegen bzw. Flussbarrieren auf.

Diese Stege sind einstückig mit dem jeweiligen Rotorblech im Rahmen eines Stanzprozesses formbar. Der Verbindungsring kann aber alternativ oder ergänzend auch als eigenes Bauteil vorgesehen werden, das ggf. nachträglich am Rotorblechpaket angebracht wird.

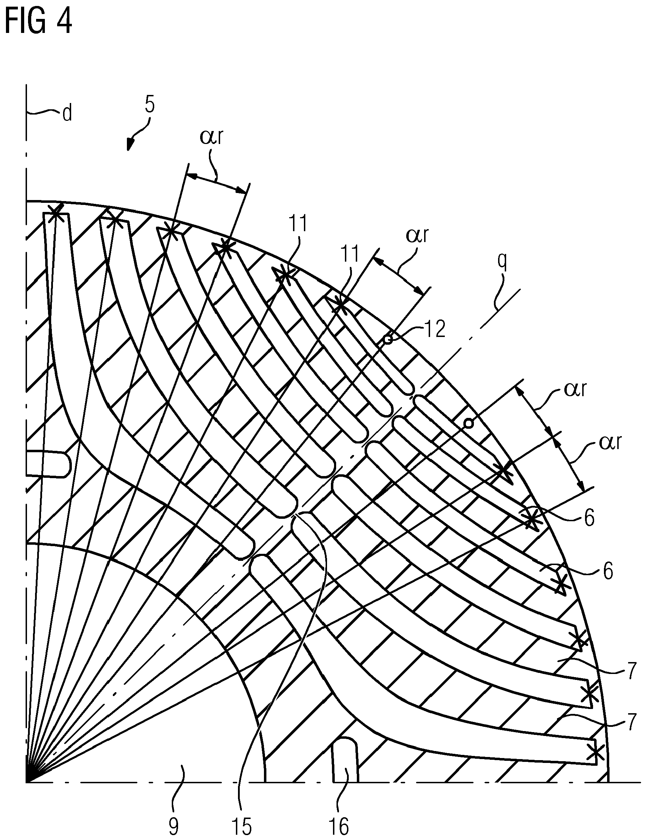

FIG 4 zeigt in einer prinzipiellen, nicht maßstäblichen Darstellung die realen und virtuellen Flussbarrieren 11, 12, die durch einen Nutteilungswinkel αr von jeweils ca. 6° in Umfangsrichtung voneinander beabstandet sind. Diese virtuellen Flussbarrieren 12 sind nicht physisch oder real vorhanden, werden aber bei der Bewertung der Nutteilung berücksichtigt. Im vorliegenden Fall sind die Flussbarrieren 12 virtuell, da die radial äußerste Flusssperre theoretisch in zwei radial sehr dünne Flusssperren unterteilt sein sollte. Die Fertigung derartiger filigraner Strukturen mittels Stanzwerkzeugen ist abhängig von der Achshöhe des Reluktanzrotors 5 nicht oder nur sehr schwierig machbar.

Die realen Flussbarrieren 11 bilden einen Abschluss einer Flusssperre 6 zum Luftspalt 10. Diese Gestaltung der Flussbarriere 11 kann mit nahezu geradlinig parallelen Kanten oder mit bogenförmigen Kanten gebildet sein. Dies hängt u.a. von den Fertigungsmöglichkeiten und/oder den Festigkeitsanforderungen an das Rotorblech ab.

Die erfindungsgemäße Gestaltung des Reluktanzrotors 5 kann auf synchrone Reluktanzmotoren 1 ohne Permanentmagnete, als auch auf synchrone Reluktanzmotoren 1, deren Rotoren Permanentmagnete aufweisen, angewendet werden. Dabei werden Permanentmagnete in vorgegebener Anzahl und/oder Position in die Flusssperren 6 eingesetzt.

Derartige Reluktanzmotoren 1 werden vor allem bei Werkzeugmaschinen als Haupt- oder Servoantriebe verwendet. Ebenso sind Anwendungen bei Kompressoren, Pumpen oder Lüfter vorstellbar. Weitere industrielle Einsatzgebiete sind beispielsweise Extruder oder Folienblasmaschinen. Diese Reluktanzmotoren 1 sind auch in der Nahrungsmittelindustrie einsetzbar.

Auch bei Antrieben in der Fahrzeugtechnik, z.B. bei Miningtrucks, Elektrobussen, Baumaschinen und auch bei Fahrzeugen unter Tage sind derartige Reluktanzmotoren 1 im Einsatz.

## Patentansprüche

1. Synchron-Reluktanzmotor, insbesondere vierpoliger Synchron-Reluktanzmotor (1) mit
- einem Stator (2) mit 48 Statornuten (3) zur Aufnahme eines Wicklungssystems (8),
- einem Reluktanzrotor (5), der durch einen Luftspalt (10) vom Stator (2) beabstandet ist, wobei der Reluktanzrotor (5) Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten (7) und magnetischen Flusssperren (6), die durch eine dementsprechende Anordnung d- und q-Achsen des Reluktanzrotors (5) bilden,
- einem geometrischen Nutteilungswinkel des Reluktanzrotors (5) von αr = 6°, der zwischen zwei benachbarten magnetischen Flusssperren (6) am Luftspalt (10) ist.

2. Synchron-Reluktanzmotor, insbesondere vierpoliger Synchron-Reluktanzmotor (1) mit
- einem Stator (2) mit 48 Statornuten (3) zur Aufnahme eines Wicklungssystems (8),
- einem Reluktanzrotor (5), der durch einen Luftspalt (10) vom Stator (2) beabstandet ist, wobei der Reluktanzrotor (5) Achsen mit einer hohen magnetischen Leitfähigkeit (d-Achse) und Achsen mit geringer magnetischer Leitfähigkeit (q-Achse) aufweist,
- einer Anordnung von magnetisch leitfähigen Flussleitabschnitten (7) und magnetischen Flusssperren (6), die durch eine dementsprechende Anordnung d- und q-Achsen des Reluktanzrotors (5) bilden,
- einem geometrischen Nutteilungswinkel des Reluktanzrotors (5) von αr = 10°, der zwischen zwei benachbarten magnetischen Flusssperren (6) am Luftspalt (10) ist.

3. Synchron-Reluktanzmotor, insbesondere vierpoliger Synchron-Reluktanzmotor (1) nach Anspruch 1, **dadurch gekennzeichnet, dass** sowohl Stator (2) als auch der Reluktanzrotor (5) ungeschrägt ausgeführt sind.

4. Synchron-Reluktanzmotor, insbesondere vierpoliger Synchron-Reluktanzmotor (1) nach einem der vorhergehenden Ansprüche, **dadurch gekennzeichnet, dass** die radiale Stegdicke im Bereich der d-Achse größer ist als im Bereich der q-Achse.
